# EUROPEAN PATENT APPLICATION

(11) **EP 2 096 637 A1**
(43) Date of publication of application: **02.09.2009**
(21) Application number: 07850720.9
(22) Date of filing: 17.12.2007
(51) Int. Cl.: G11B 7/254, C08F 290/06, G11B 7/24, G11B 7/257

(54) **RADIATION CURING COMPOSITION FOR OPTICAL RECORDING MEDIUM, AND OPTICAL RECORDING MEDIUM**

(30) Priority: 19.12.2006 JP 2006341707; 29.08.2007 JP 2007222293
(71) Applicant: Mitsubishi Chemical Corporation, Minato-ku Tokyo 108-0014 (JP)
(72) Inventor: ESAKI, Akira, Yokohama-shi Kanagawa 227-8502 (JP); HIWATASHI, Tomoaki, Tokyo 108-0014 (JP)
(74) Representative: HOFFMANN EITLE
(86) International application number: PCT/JP2007/074232
(87) International publication number: WO 2008/075647

(57) **Abstract**

In order to provide a radiation-curable composition which exhibits corrosion proof while maintaining mechanical properties and preservation stability and an optical recording medium using the composition, the radiation-curable composition for an optical recording medium comprises a urethane (meth)acrylate compound (A) and a compound (C) containing one or more epoxy groups, and has an acid content of 1.0×10⁻⁴ eq/g or less.

## Description

### Technical Field

The present invention relates to a radiation-curable composition for a protective layer in an optical recording medium, and an optical recording medium using the same.

### Background Art

As an example of a radiation-curable composition that is used in a protective film of an information recording layer in an optical recording medium, the inventors have previously found an optical application of a radiation-curable composition comprising silica particles being the hydrolysate of an alkoxysilane oligomer, a monomer and/or its oligomer having a urethane bond, such as a urethane (meth)acrylate, and the like, and have filed a patent application based on this finding (Patent Document 1).

As another radiation-curable composition, an active energy ray-curable composition is disclosed which contains no inorganic substances such as silica particles, but at least one oligomer component of urethane (meth)acrylate and epoxy (meth)acrylate, dioxolanyl group-containing (meth)acrylate, and another ethylenically unsaturated compound (Patent Document 2).

The inventors also have previously filed a patent application on a radiation-curable composition having water absorption of 2% by weight or less (Patent Document 3).

Moreover, an adhesive composition for an optical recording medium (optical disc) is disclosed as one example using a light curing process (Patent Document 4).

[Patent Document 1] JP-A-2005-036184
[Patent Document 2] JP-A-2003-231725
[Patent Document 3] JP-A-2006-161030
[Patent Document 4] JP-A-2004-359779

### Disclosure of Invention

### Problems to be Solved by the Invention

The radiation-curable composition according to Patent Document 1 exhibited not only surface hardness and transparency but also excellent adherence to a substrate when used as a layer of a cured product having a thickness of several tens of micrometers or more in the formation of a laminate on the substrate.
The inventors, however, further investigated this curable composition to find that it readily caused a metal layer to corrode when used as a protective layer, which was placed in contact with the metal layer, for an information recording layer in an optical recording medium.

Thus, various studies have been conducted to prevent the corrosion of the metal layer.
For example, the active energy ray-curable composition according to Patent Document 2 can provide a cured product which not only has excellent adherence to a substrate, low curing shrinkage, and mechanical strength, but also can prevent the corrosion of the metal layer.
In addition, the radiation-curable composition according to Patent Document 3 can reduce the corrosion of the metal layer due to its water absorption of 2% or less.

However, any radiation-curable composition cannot sufficiently prevent the corrosion of the metal layer, and still has disadvantages such as poor data preservation when applied to an optical recording medium.

The present invention has been made in view of the above disadvantages. Specifically, an object of the present invention is to provide a radiation-curable composition for an optical recording medium which exhibits corrosion proof while maintaining mechanical properties and preservation stability, and an optical recording medium using the same.

### Means for Solving the Problem

The inventors have intensively studied a radiation-curable composition for an optical recording medium which can meet the above object, and found that introduction of an epoxy group into a radiation-curable composition comprising a urethane (meth)acrylate compound can prevent the corrosion of metals.

A radiation-curable composition generally used for a protective layer in an optical recording medium is a urethane composition. On the other hand, since an epoxy compound is not radiation curable, it was assumed that the epoxy compound was not be able to be incorporated into the cured network when introduced into a radiation-curable composition and it would merely functioned as a plasticizer after the radiation-curable composition was cured, resulting in poor mechanical properties. In addition, since the epoxy compound is a self-polymerizable thermosetting resin, it exhibits poor preservation stability. Moreover, since the epoxy compound is made of epichlorohydrin and carries much material-derived chlorine, it was assumed that chlorine would promote corrosion. For this reason, introduction of an epoxy compound into a radiation-curable composition had not been tried.
However, the inventors unexpectedly found that introduction of an epoxy compound into a radiation-curable composition could prevent the corrosion with satisfactory mechanical properties and preservation stability, and accomplished the present invention.

That is, one aspect of the present invention consists in a radiation-curable composition for an optical recording medium comprising a urethane (meth)acrylate compound (A); the composition further comprising a compound (C) having one or more epoxy groups, wherein the acid content is 1.0×10⁻⁴ eq/g or less (claim 1).

Another aspect of the present invention consists in a radiation-curable composition for an optical recording medium of film surface-incidence type comprising a urethane (meth)acrylate compound (A); the composition further comprising a compound (C) having one or more epoxy groups (claim 2).

In these cases, preferably the radiation-curable composition for an optical recording medium of the present invention further comprises an acrylate compound (B) other than the urethane (meth)acrylate compound (A) (claim 3).

The radiation-curable composition for an optical recording medium of the present invention preferably comprise a polyfunctional (meth) acrylate compound as the acrylate compound (B) other than the urethane (meth)acrylate compound (A) (claim 4).

In addition, the compound (C) having one or more epoxy groups in a molecule is preferably at least one resin selected from a bisphenol A epoxy resin and a hydrogenated bisphenol A epoxy resin (claim 5).

Moreover, the epoxy group content in the radiation-curable composition for an optical recording medium of the present invention is preferably 1×10⁻⁶ mol/g to 1×10⁻³ mol/g (claim 6).

In addition, the urethane (meth)acrylate compound (A) is preferably produced by the reaction of a polyisocyanate compound, a polyether polyol compound, and a hydroxyl group-containing (meth)acrylate compound (claim 7).

Moreover, the polyether polyol compound is preferably a polyalkylene glycol having a molecular weight of 800 or less (claim 8).

Another aspect of the present invention consists in an optical recording medium comprising a cured product comprising the radiation-curable composition for an optical recording medium of the present invention (claim 9).

### Advantages

The present invention can provide a radiation-curable composition for an optical recording medium which can prevent the corrosion of the metal layer with maintaining mechanical properties and preservation stability, and an optical recording medium using the same.

### Brief Description of the Drawings

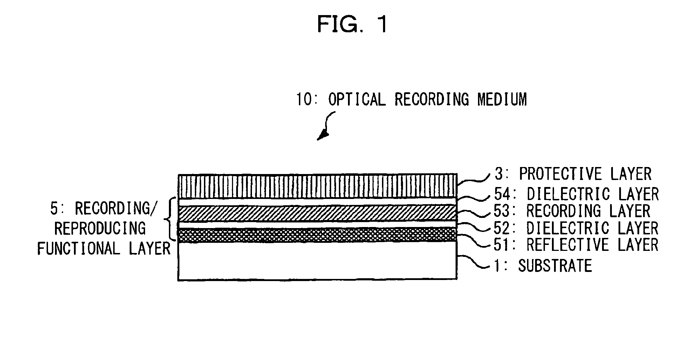

Fig. 1 is a cross-sectional view showing an optical recording medium of an embodiment of the present invention.

### Explanation of Reference Numerals

1; substrate
3; protective layer
5; recording/reproducing functional layer
51; reflective layer
52; dielectric layer
53; recording layer
54; dielectric layer
10; optical recording medium

### Best Mode for Carrying out the Invention

The embodiments of the present invention will be described in detail below. It should be noted, however, that the present invention is not limited thereto and various variations can be made within the scope of the invention.

The Symbols (A), (B), (C), (D), (x), and (y) used herein respectively for "a urethane (meth)acrylate compound (A)", "an acrylate compound(B) other than urethane (meth)acrylate compound (A)", "a compound (C) having one or more epoxy groups in a molecule", "a polymerization initiator (D)", "an isocyanate group-containing trimethoxysilane compound (x)", and "an epoxy group-containing trimethoxysilane compound (y)" are used only for identification of these compounds and have no further meaning.

### [1. Radiation-curable composition for optical recording medium]

The radiation-curable composition for an optical recording medium of the present invention comprises a urethane (meth) acrylate compound (A) and a compound (C) having one or more epoxy groups. The radiation-curable composition for an optical recording medium of the present invention may accept any manufacturing method, may have any properties, and may comprise further substances within the scope of the present invention.

### <1-1. Urethane (meth)acrylate compound (A)>

The urethane (meth)acrylate compound (A) can generally be produced by the reaction of a polyisocyanate compound, a hydroxyl group-containing compound, and a hydroxyl group-containing (meth)acrylate compound. A preferred urethane (meth)acrylate compound (A) is a urethane acrylate compound, which has excellent surface-hardening property with low tackiness.

### (a. Polyisocyanate compound)

A polyisocyanate compound has two or more isocyanate groups in a molecule. The polyisocyanate compound is preferred since it has excellent mechanical properties.
Examples of the polyisocyanate compound include tetramethylene diisocyanate, hexamethylene diisocyanate, trimethylhexamethylene diisocyanate, bis(isocyanatomethyl)cyclohexane, cyclohexane diisocyanate, bis(isocyanatocyclohexyl)methane, isophorone diisocyanate, tolylene diisocyanate, xylylene diisocyanate, diphenylmethane diisocyanate, m-phenylene diisocyanate, naphthalene diisocyanate.

Among these preferred are bis (isocyanatomethyl) cyclohexane, cyclohexane diisocyanate, bis(isocyanatocyclohexyl)methane, and isophorone diisocyanate since the hue of the resultant urethane oligomers is satisfactory.
These polyisocyanate compounds may be used alone or in any combination at any ratio of two or more.
In addition, the molecular weight of the polyisocyanate compound is generally 100 or more, preferably 150 or more, and generally 1000 or less, preferably 500 or less. The polyisocyanate compound having such a range of molecular weight can have fine compatibility between strength and elasticity.

### (b. Hyrodxyl (sic) group-containing compound)

Preferred hyrodxyl (sic) group-containing compounds are polyols containing two or more hydroxyl groups. Examples of the polyols include alkylene polyols such as ethylene glycol, 1,2-propanediol, 1,3-propanediol, 2-methyl-1,3-propanediol, 1,3-butanediol, 1,4-butanediol, 1,5-pentanediol, 2-methyl-1,5-pentanediol, neopentyl glycol, 3-methyl-1,5-pentanediol, 2,3,5-trimethyl-1,5-pentanediol, 1,6-hexanediol, 2-ethyl-1,6-hexanediol, 2,2,4-trimethyl-1,6-hexanediol, 1,8-octanediol, trimethylolpropane, pentaerythritol, sorbitol, mannitol, glycerol, 1,2-dimethylolcyclohexane, 1,3-dimethylolcyclohexane, and 1,4-dimethylolcyclohexane.
Among these preferred are polyether polyol compounds which have ether bonds for formation of multimers and the like; polyester polyol compounds which have ester bonds formed by the reaction with polybasic acids or formed by the ring-opening polymerization of cyclic esters; and polycarbonate polyol compounds which have carbonate bonds formed by the reaction with carbonates.

In addition to the multimers of the polyols, examples of the polyether polyol compound include polytetramethylene glycols as the ring-opening polymers of cyclic ethers such as tetrahydrofuran; and adducts of the polyols with alkylene oxides such as ethylene oxide, propylene oxide, 1,2-butylene oxide, 1,3-butylene oxide, 2,3-butylene oxide, tetrahydrofuran, and epichlorohydrin.

Examples of the polyester polyol compound include reaction products of the above-mentioned polyols with polybasic acids such as maleic acid, fumaric acid, adipic acid, sebacic acid, and phthalic acid, and polycaprolactones as ring-opening polymers of cyclic esters such as caprolactone.

Examples of the polycarbonate polyol compound include reaction products of the above-mentioned polyols with alkylene carbonates such as ethylene carbonate, 1,2-propylene carbonate, 1,2-butylene carbonate; or diaryl carbonates such as diphenyl carbonate, 4-methyldiphenyl carbonate, 4-ethyldiphenyl carbonate, 4-propyldiphenyl carbonate, 4,4'-dimethyldiphenyl carbonate, 2-tolyl-4-tolyl carbonate, 4,4'-diethyldiphenyl carbonate, 4,4'-dipropyldiphenyl carbonate, phenyl tolyl carbonate, bis(chlorophenyl) carbonate, phenyl chlorophenyl carbonate, phenyl naphthyl carbonate, dinaphthyl carbonate; or dialkyl carbonates such as dimethyl carbonate, diethyl carbonate, di-n-propyl carbonate, diisopropyl carbonate, di-n-butyl carbonate, diisobutyl carbonate, di-t-butyl carbonate, di-n-amyl carbonate, and diisoamyl carbonate.

These polyols may be used alone or in any combination at any ratio of two or more.

The number average molecular weight of at least parts of the polyols, preferably 15 mol% or more, more preferably 30 mol% or more of the total polyols is preferably 200 or more, more preferably 400 or more, and preferably 1500 or less, more preferably 800 or less. The polyols having such a range of number average molecular weight can exhibit low water absorption and low hygroscopicity in the form of monomer having urethane bonds, and can reduce the corrosion of the recording layer in the form of cured product when used for an optical recording medium and the like.

Among these polyols preferred are polyether polyol compounds, in particular, polyalkylene glycols. Particularly preferred polyalkylene glycols are tetramethylene glycols.
In addition, the number average molecular weight of the polyols is generally 1500 or less, preferably 800 or less, and generally 200 or more, preferably 400 or more.
That is, polyalkylene glycols having a number average molecular weight of 800 or less are preferred, and polytetramethylene glycols having a number average molecular weight of 800 or less are particularly preferred.

### (c. Hydroxyl group-containing (meth)acrylate compound)

The hydroxyl group-containing (meth)acrylate compound has a hydroxyl group and a (meth)acryloyl group. Examples thereof include the addition reaction products of hydroxyethyl (meth)acrylate, hydroxypropyl (meth)acrylate, hydroxybutyl (meth)acrylate, or a glycidyl ether compound with (meth) acrylic acid, and mono(meth)acrylates of glycol compounds.
These hydroxyl group-containing (meth)acrylate compounds may be used alone or in any combination at any ratio of two or more.

The molecular weight of the hydroxyl group-containing (meth)acrylate compound is generally 40 or more, preferably 80 or more, and generally 800 or less, preferably 400 or less.

### (d. Method for preparing urethane (meth) acrylate compound (A))

The urethane (meth)acrylate compound (A) having a (meth)acryloyl group can be prepared by the addition reaction of a polyisocyanate compound, a hydroxyl group-containing compound, and a hydroxyl group-containing (meth)acrylate compound. These materials are fed such that isocyanate groups and hydroxyl groups are stoichiometric. In particular, a urethane (meth)acrylate compounds (A) containing a diol as the hydroxyl group-containing compound and having a (meth)acryloyl group has advantages of enhanced adherence and high surface hardness of the resultant cured product.

In the preparation of the urethane (meth)acrylate compound (A), the amount of the hydroxyl group-containing (meth) acrylate compound used should be generally 20% by weight and more, preferably 40% by weight or more, and generally 80% by weight or less, preferably 60% by weight or less based on the total amount of all hydroxyl group-containing compounds including the above-mentioned hydroxyl group-containing compound and the above-mentioned hydroxyl group-containing (meth)acrylate compound. By changing the ratio of these compounds, the molecular weight of the resultant urethane (meth)acrylate compound (A) can be regulated.

This addition reaction of the polyisocyanate compound with the hydroxyl group-containing (meth)acrylate compound can be conducted by any known methods. For example, a polyisocyanate compound, a hydroxyl group-containing (meth)acrylate compound, and an addition reaction catalyst are mixed generally at 40°C or higher, preferably 50°C or higher, and generally at 90°C or lower, preferably 75°C or lower.
In particular, it is preferred to add the mixture of a hydroxyl group-containing (meth)acrylate compound and an addition reaction catalyst dropwise to a polyisocyanate compound.

Examples of preferred catalysts for the addition reaction include dibutyltin laurate, dibutyltin dioctoate, dioctyltin dilaurate, and dioctyltin dioctoate. These catalysts may be used alone or in any combination at any ratio of two or more.

In addition, any component other than the above-mentioned compounds may be added in the preparation of the urethane (meth)acrylate compound (A).

### (e. Others)

Preferred urethane (meth) acrylate compounds (A) are highly transparent materials, for example, compounds having no aromatic ring. The radiation-curable composition having aromatic rings and its cured product may disadvantageously yield a colored cured product and accelerate coloring of the cured product during storage (so-called yellowing) regardless of the initial state of the product.
The yellowing is believed to be caused by the double-bond parts of the aromatic ring undergoing an irreversible change in structure by the action of energy rays. Consequently, the urethane (meth) acrylate compound (A) having no aromatic ring has an advantage that the cured product undergoes no deterioration in hue and no decrease in light transmittance and is suitable for use especially in applications where colorless transparency is required, such as optoelectronics.

The urethane (meth) acrylate compound (A) having no aromatic ring can be prepared by the addition reaction of a polyisocyanate compound having no aromatic ring, a hydroxyl group-containing compound having no aromatic ring, and a hydroxyl group-containing (meth)acrylate compound having no aromatic ring.

Examples of the polyisocyanate compound having no aromatic ring include bis(isocyanatomethyl)cyclohexane, cyclohexane diisocyanate, bis(isocyanatocyclohexyl)methane, and isophorone diisocyanate. These compounds may be used alone or in any combination at any ratio of two or more.

Examples of the hydroxyl group-containing compound having no aromatic ring include alkylene polyols, alkylene polyesters, and alkylene carbonate polyols. These compounds may be used alone or in any combination at any ratio of two or more.

Examples of the hydroxyl group-containing (meth)acrylate compound having no aromatic ring include hydroxyalkyl(meth)acrylates. These compounds may be used alone or in any combination at any ratio of two or more.

The weight average molecular weight of these urethane (meth)acrylate compounds (A) is generally 1000 or more, preferably 1500 or more, and generally 10000 or less, preferably 5000 or less. The urethane (meth) acrylate compounds (A) having such a weight average molecular weight can have high compatibility between viscosity and mechanical properties.

The content of the urethane (meth) acrylate compound (A) in the radiation-curable composition for an optical recording medium is preferably 25% by weight or more, more preferably 30% by weight or more, and preferably 95% by weight or less, more preferably 90% by weight or less. A lower content of the compound may lead to poor moldability and low mechanical strength in the formation of a cured product, resulting in ready cracking of the cured product. On the other hand, a higher content of the compound may cause a cured product to have low surface hardness.

### <1-2. Acrylate compound (B) other than urethane (meth)acrylate compound (A)>

The radiation-curable composition for an optical recording medium of the present invention preferably further comprises an acrylate compound (B) other than the urethane (meth)acrylate compound (A) (hereinafter optionally referred to as "second acrylate compound (B)").
Usable other acrylate compounds (B) may be any known acrylate compounds that are different from the urethane (meth)acrylate compound (A) and do not impair the advantages of the present invention. Examples of such compounds include monofunctional (meth)acrylate compounds and polyfunctional (meth)acrylate compounds. Among these preferred are monofunctional acrylate compounds and polyfunctional acrylate compounds, since they have excellent surface-hardening property with low tackiness.

Examples of the monofunctional (meth)acrylate compounds include (meth) acrylamides such as N,N-dimethyl (meth) acrylamide, hydroxy (meth)acrylates such as hydroxyethyl (meth)acrylate, hydroxypropyl (meth)acrylate, and hydroxybutyl (meth)acrylate, alicyclic (meth)acryates such as (meth)acryloylmorpholine, tetrahydrofurfuryl (meth)acrylate, isobornyl (meth)acrylate, cyclohexyl (meth)acrylate, and (meth)acrylates having tricyclodecane skeletons.

Among these preferred are alicyclic (meth)acrylates, in particular, highly hydrophobic tetrahydrofurfuryl (meth)acrylate, isobornyl (meth)acrylate, cyclohexyl (meth)acrylate, and (meth)acrylates having tricyclodecane skeletons.

Examples of the polyfunctional (meth)acrylate compound include aliphatic poly(meth)acrylates, alicyclic poly(meth)acrylates, and aromatic poly(meth)acrylates.

Specific examples include (meth)acrylates having polyether skeletons such as poly(ethylene glycol) di(meth)acrylate, poly(1,2-propylene glycol) di(meth)acrylate, poly(1,3-propylene glycol) di(meth)acrylate, poly(tetramethylene glycol) di(meth)acrylate, poly(1,2-butylene glycol) di(meth)acrylate, poly(isobutylene glycol) di(meth)acrylate, di(meth)acrylates of adducts of bisphenols such as bisphenol A, bisphenol F, or bisphenol S with alkylene oxides such as ethylene oxide, propylene oxide or butylene oxide, di(meth)acrylates of hydrogenated derivatives of bisphenols such as bisphenol A, bisphenol F, or bisphenol S, and di(meth)acrylates of block or random copolymers of various polyether polyol compounds with other compounds; and (meth)acrylates having various functionalities, e.g., bifunctional (meth)acrylates such as hexanediol di(meth)acrylate, nonanediol di(meth)acrylate, decanediol di(meth)acrylate, 2,2-bis[4-(meth)acryloyloxyphenyl]propane, 2,2-bis[4-(2-(meth)acryloyloxyethoxy)phenyl]propane, bis(hydroxymethyl)tricyclo[5.2.1.0^{2,6}]decane=dimethacrylate, p-bis[β-(meth)acryloyloxyethylthio]xylylene, and 4,4'-bis[β-(meth)acryloyloxyethylthio]diphenyl sulfone, trifunctional (meth)acrylates such as trimehylolpropane tris(meth)acrylate, glycerine tris(meth)acrylate, and pentaerythritol tris(meth)acrylate, tetrafunctional (meth)acrylates such as pentaerythritol tetra(meth)acrylate, and (meth)acrylates having a functionality of 5 or higher such as dipentaerythritol hexa(meth)acrylate.

Among these preferred are the bifunctional (meth) acrylates from the standpoint of the controllability of crosslinking reaction. Preferred bifunctional (meth) acrylates are aliphatic poly(meth)acrylates, alicyclic poly(meth)acrylates, in particular, hexanediol di(meth)acrylate, nonanediol di(meth)acrylate, and bis(hydroxymethyl)tricyclo[5.2.1.0^{2,6}]decane=dimethacrylate.

Alternatively, (meth)acrylates having a functionality of 3 or higher are preferably used to enhance heat resistance and surface hardness of the cross-linked cured product. Examples of such (meth)acrylates include trimethylolpropane tris(meth)acrylate, pentaerythritol tris(meth)acrylate, dipentaerythritol hexa(meth)acrylate, and trifunctional (meth)acrylates having isocyanurate skeletons.

The molecular weight of these other acrylate compounds (B) is generally 50 or more, preferably 100 or more, and generally 1000 or less, preferably 500 or less. The compounds having such a range of molecular weight can have high compatibility between viscosity and shrinkage.

The content of the second acrylate compound (B) in the radiation-curable composition for an optical recording medium is preferably 10% by weight or more, more preferably 15% by weight or more, and preferably 70% by weight or less, more preferably 50% by weight or less. A lower content of the compound may lead to an increase in viscosity of the radiation-curable composition for an optical recording medium. On the other hand, a higher content of the compound may cause a cured product to have poor mechanical properties.

The second acrylate compounds (B) may be used alone or in any combination at any ratio of two or more.
The second acrylate compound (B) preferably comprises at least one monofunctional (meth)acrylate compound and at least one polyfunctional (meth)acrylate compound.

The content of the second acrylate compound (B) is desirably 80% by weight or more, preferably 90% by weight or more, much more preferably 95% by weight or more, most preferably 98% by weight or more, based on the total amount of the urethane (meth) acrylate compound (A) and the second acrylate compound (B). A lower content of the compound (B) may cause the composition of the present invention to have a low curing rate and poor surface hardening property with high tackiness.

### <1-3. Polymerization initiator (D)>

The radiation-curable composition for an optical recording medium of the present invention preferably comprises a polymerization initiator (D) to initiate the polymerization reaction induced by radiation (e.g., active energy rays, ultraviolet light, or electron beams). In particular, when the radiation is active energy rays or ultraviolet light, addition of the polymerization initiator (D) is preferred. A typical polymerization initiator (D) is a radical generator which is a compound generating radicals by light. Any known radical generator can be used as long as it does not significantly impair the advantages of the present invention.

Examples of such radical generators include, benzophenone, 2,4,6-trimethylbenzophenone, 4,4-bis(diethylamino)benzophenone, 4-phenylbenzophenone, methyl ortho-benzoylbenzoate, thioxanthone, diethylthioxanthone, isopropylthioxanthone, chlorothioxanthone, 2-ethylanthraquinone, t-butyl anthraquinone, diethoxyacetophenone, 2-hydroxy-2-methyl-1-phenylpropan-1-one, benzyl dimethyl ketal, 1-hydroxycyclohexyl phenyl ketone, benzoin methyl ether, benzoin ethyl ether, benzoin isopropyl ether, benzoin isobutyl ether, methyl benzoyl formate, 2-methyl-1-[4-(methylthio)phenyl]-2-morpholinopropan-1-one, 2,6-dimethylbenzoyldiphenylphosphine oxide, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)phenylphosphine oxide, and 2-hydroxy-1-[4-[4-(2-hydroxy-2-methyl-propionyl)-benzyl]-phe nyl]-2-methyl-propan-1-one.
Among them preferred are 1-hydroxycyclohexyl phenyl ketone, 2,4,6-trimethylbenzoyldiphenylphosphine oxide, and 2-hydroxy-1-[4-[4-(2-hydroxy-2-methyl-propionyl)-benzyl]-phe nyl]-2-methyl-propan-1-one.

Among the above radical generators more preferred are benzophenone, 2-hydroxy-2-methyl-1-phenylpropan-1-one, 1-hydroxycyclohexyl phenyl ketone, 2-hydroxy-1-[4-[4-(2-hydroxy-2-methyl-propionyl)-benzyl]-phe nyl]-2-methyl-propan-1-one, 2,4,6-trimethylbenzoyldiphenylphosphine oxide, which can sufficiently increase the crosslink density with a high curing rate.

It is preferred to select the type and the amount of the radical generator to be used in the application of the cured product composed of the radiation-curable composition for an optical recording medium of the present invention to an optical recording medium and the like using a laser light source having wavelength of 380 to 800 nm, such that the laser beam to be detected can fully pass through the layer of the cured product. In this case, use of a short-wave-sensitive radical generator is particularly preferred so that the layer of the resultant cured product barely absorbs the laser beam.
Among the above-mentioned radical generators, examples of such short-wave-sensitive radical generators include benzophenone, 2,4,6-trimethylbenzophenone, 4-phenylbenzophenone, methyl ortho-benzoylbenzoate, diethoxyacetophenone, 2-hydroxy-2-methyl-1-phenylpropan-1-one, benzyl dimethyl ketal, 1-hydroxycyclohexyl phenyl ketone, benzoin methyl ether, benzoin ethyl ether, benzoin isopropyl ether, benzoin isobutyl ether, methyl benzoyl formate. Among them particularly preferred are compounds having hydroxyl groups such as 1-hydroxycyclohexyl phenyl ketone.

The radical generators may be used alone or in any combination at any ratio of two or more.
The amount of the radical generator is generally 0.1 parts by weight or more, preferably 1 parts by weight or more, more preferably 2 parts by weight or more, and generally 10 parts by weight or less, desirably 9 parts by weight or less, preferably 7 parts by weight or less, more preferably 5 parts by weight or less, most preferably 4 parts by weight or less based on the total amount (100 parts by weight) of the urethane (meth)acrylate compound (A) and the second acrylate compound (B). A higher content of the radical generator may cause rapid polymerization reaction, resulting in poor hue, in addition to increased optical strain. A lower content of the radical generator may cause insufficient curing of the radiation-curable composition for an optical recording medium.

Any known sensitizers such as methyl 4-dimethylaminobenzoate, ethyl 4-dimethylaminobenzoate, amyl 4-dimethylaminobenzoate, and 4-dimethylaminoacetophenone may be used in combination with these radical generators. These sensitizers may be used alone or in any combination at any ratio of two or more.

The amount of benzophenone-based polymerization initiators used as the polymerization initiator (D) is preferably 2 parts by weight or less, more preferably 1 parts by weight or less, and generally 0. 5 parts by weight or more based on the total amount (100 parts by weight) of urethane (meth)acrylate compound (A) and the second acrylate compound (B). A higher content of the benzophenone-based polymerization initiator may cause a cured product to contain large amounts of volatile components, resulting in reduced thickness of the cured product at high-temperature and high-humidity environments.

Although the above-mentioned radical generators may be used in combination with electron beams for the initiation of polymerization reaction, it is preferred to use no radical generator or no other initiator. It is because the composition of the present invention can cure enough without the polymerization initiator (D).

Examples of the polymerization initiator (D) other than the radical generator include oxidizers.

These polymerization initiators (D) may be used alone or in any combination at any ratio of two or more.

The polymerization initiator (D) may contain impurities such as chlorine atoms, sulfur atoms, phosphorus atoms, and sodium atoms. It is preferred that the content of such impurities be low. Each content is desirably 100 ppm or less, preferably 50 ppm or less, more preferably 30 ppm or less, most preferably 10 ppm or less.

### <1-4. Epoxy group-containing compound (C)>

The radiation-curable composition for an optical recording medium of the present invention comprises a compound (C) having one or more epoxy groups. The epoxy groups can be incorporated into the composition by any means. For example, the compound having one or more epoxy groups in a molecule can be added to the radiation-curable composition for the optical recording medium, or the epoxy group-containing urethane (meth)acrylate compound (A) can be added to the radiation-curable composition for an optical recording medium.

### (a. Compound (C) having one or more epoxy groups in a molecule)

The compound (C) having one or more epoxy groups in a molecule according to the invention is not particularly limited as long as it is an epoxy group-containing compound.
Examples of such a compound include polyhydric phenols, such as novolacs of bisphenol A, bisphenol F, bisphenol S, phenols, or alkylphenols; glycols; glycidyl ether epoxy resins prepared by glycidylation of polyhydric alcohols such as trimethylolpropane; glycidyl ester epoxy resins prepared by glycidylation of polycarboxylic acids such as adipic acid and phthalic acid; glycidyl amine epoxy resins prepared by glycidylation of polyamines such as diaminodiphenylmethane, diaminodiphenylsuphone, and isocyanurate; glycidyl aminoglycidyl ether epoxy resins prepared by glycidylation of aminophenols or aminoalkylphenols; alicyclic epoxides such as 3,4-epoxy-6-methylcyclohexyl-3,4-epoxy-6-methylcyclohexylcar boxylate, 3,4-epoxycyclohexylmethyl-3,4-epoxycyclohexylcarboxylate.

These compounds may be substituted by halogens such as chlorine and bromine, or may be adducts with polyalkylene oxides such as poly(ethylene oxide). In addition, compounds having aromatic rings may be hydrogenated. Preferably these compounds are thoroughly purified until impurities and colored components are sufficiently removed.

Among these preferred are glycidyl ether epoxy resins prepared by glycidylation of bisphenol A or bisphenol F, and hydrogenated compounds thereof, since they are readily available and barely impair physical properties of the radiation-curable composition for an optical recording medium. Among them particularly preferred are bisphenol A epoxy resins or hydrogenated bisphenol A epoxy resins.

Alternatively, the compound (C) having one or more epoxy groups in a molecule is preferably silica having epoxy groups on its surface.

A method for preparing the silica having epoxy groups on its surface is described below. The alkoxy groups of silicate oligomers are hydrolyzed by, for example, an acid catalyst in an alcohol solvent to form silicon oxide nanoparticles. The surfaces of the resultant silicon oxide nanoparticles are reacted with an epoxy group-containing trimethoxysilane compound (y) optionally in combination with another silane compound to form silica particles of which the surface is modified with epoxy groups.

Examples of the preferred alcohol solvent include methanol, ethanol, and propanol. Among them preferred is methanol, which has good balance of hydrophilic and hydrophobic properties. These alcohol solvents may be used alone or in any combination at any ratio of two or more. The preferred amount of the alcohol solvent used is generally 100% by weight or more, preferably 200% by weight or more, and, generally 900% by weight or less, preferably 400% by weight or less based on the solid content. A lower amount of the alcohol solvent used may cause gelation. On the other hand, a higher amount of alcohol solvent may lead to insufficient reaction.

Examples of preferred silicate oligomers include methyl silicate, ethyl silicate, and (meth)acryloyl modified products, epoxy modified products, and butoxy modified products thereof. Among them preferred is methyl silicate, which can react at an appropriate rate, barely cause gelation and clouding, and form stable particles. These silicate oligomers may be used alone or in any combination at any ratio of two or more.

Examples of preferred acid catalysts include inorganic acids, organic acids, and acidic chelate compounds. Among them preferred are acidic chelate compounds having a proper pH, and particularly preferred is acetylacetone aluminium. These acid catalysts may be used alone or in any combination at any ratio of two or more. The desired amount of the acid catalyst used is generally 0.05% by weight or more, and preferably 0.1% by weight or more, and generally 1% by weight or less, and preferably 0.5% by weight or less based on the total amount of the solid content and the solvent. A lower amount of acid catalyst may lead to insufficient reaction. On the other hand, a higher amount of acid catalyst may cause gelation.

Examples of the preferred epoxy group-containing trimethoxysilane compound (y) include glycidoxypropyltrimethoxysilane, glycidoxypropyltriethoxysilane, glycidoxypropylmethyldiethoxysilane, and 2-(3,4-epoxycyclohexyl)ethyltrimethoxysilane. Among them preferred is glycidoxypropyltrimethoxysilane, which can react with the surfaces of silicon oxide nanoparticles at an appropriate rate and barely cause gelation and clouding. The epoxy group-containing trimethoxysilane compounds (y) may be used alone or in any combination at any ratio of two or more.

The amount of the epoxy group-containing trimethoxysilane compound (y) used is not limited, but is generally 0.5% by weight or more, and preferably 1% by weight or more, more preferably 2% by weight or more, and generally 200% by weight or less, and preferably 100% by weight or less, more preferably 50% by weight or less based on the silicon oxide nanoparticles. A lower amount of compound (y) may lead to poor corrosion proof to metals. On the other hand, a higher amount of compound (y) may reduce the preservation stability of the composition.

Examples of the silane compounds usable in combination with the epoxy group-containing trimethoxysilane compound (y) include tetramethoxysilane, tetraethoxysilane, methyltrimethoxysilane, methyltriethoxysilane, dimethyldimethoxysilane, dimethyldiethoxysilane, phenyltrimethoxysilane, phenyltriethoxysilane, diphenyldimethoxysilane, diphenyldiethoxysilane, hexyltrimethoxysilane, hexyltriethoxysilane, decyltrimethoxysilane, trifluoropropyltrimethoxysilane, (meth)acryloxypropyltrimethoxysilane, and (meth)acryloxypropyltriethoxysilane. Among them preferred are hexyltrimethoxysilane, decyltrimethoxysilane, trifluoropropyltrimethoxysilane, and (meth)acryloxypropyltrimethoxysilane, and more preferred are hexyltrimethoxysilane and acryloxypropyltrimethoxysilane, which can react with the surfaces of the silicon oxide nanoparticles at an appropriate rate and barely cause gelation and clouding. These silane compounds may be used alone or in any combination at any ratio of two or more.

The amount of the silane compounds usable in combination with the epoxy group-containing trimethoxysilane compound (y) varies depending on the amount of the epoxy group-containing trimethoxysilane compound (y) used, and the total amount of both compounds used is generally 5% by weight or more, and preferably 20% by weight or more, more preferably 50% by weight or more, and generally 300% by weight or less, and preferably 200% by weight or less, more preferably 100% by weight or less based on the silicon oxide nanoparticles. A lower total amounts of silane compounds with the epoxy group-containing trimethoxysilane compound(y) and the epoxy group-containing trimethoxysilane compound (y) based on the silicon oxide nanoparticles may impair the dispersion stability of the silicon oxide nanoparticle. On the other hand, a higher amount of these compounds may cause selfpolymerization of the extra silane compounds, resulting in clouding and gelation of the composition.

The reaction temperature for hydrolysis is generally 20°C or higher, and preferably 40°C or higher, and generally 90°C or lower, and preferably 80°C or lower. A higher reaction temperature may cause gelation. On the other hand, a lower reaction temperature may lead to a low-rate reaction. In addition, the reaction time is generally 30 minutes or longer, preferably 90 minutes or longer, and generally 48 hours or shorter, and preferably 24 hours or shorter. A longer reaction time may cause gelation. On the other hand, a shorter reaction time may lead to insufficient reaction.

The surfaces of the silicon oxide nanoparticles are reacted with the epoxy group-containing trimethoxysilane compound (y) and another silane compound generally at 20°C or higher, and preferably at 40°C or higher, and generally at 90°C or lower, preferably at 80°C or lower. A higher reaction temperature may cause gelation. On the other hand, a lower reaction temperature may lead to insufficient reaction. In addition, the reaction time is generally 30 minutes or longer, and preferably 90 minutes or longer, and generally 48 hours or shorter, and preferably 24 hours or shorter. A longer reaction time may cause gelation. On the other hand, a shorter reaction time may lead to insufficient reaction.

These compounds (C) having one or more epoxy groups in a molecule may be used alone or in any combination at any ratio of two or more.

### (b. Epoxy group-containing urethane (meth)acrylate compound (A))

The radiation-curable composition for an optical recording medium of the present invention may comprise the epoxy group-containing urethane (meth)acrylate compound (A) as the compound having one or more epoxy groups (C). Specifically, epoxy groups may be incorporated into all compounds exemplified above as the urethane (meth)acrylate compound (A).

The epoxy group-containing urethane (meth)acrylate compound (A) can be prepared by any method that does not significantly impair the advantages of the present invention. As such an example, a method for reacting the urethane (meth)acrylate compound (A) with the silicate oligomer and the epoxy group-containing trimethoxysilane compound (y) is described below.

Examples of the silicate oligomer and the epoxy group-containing trimethoxysilane compound (y) to be used may be the same as those described above for (a. Compound (C) having one or more epoxy groups in a molecule).
The reactions of the urethane (meth)acrylate compound (A), the silicate oligomer, and the epoxy group-containing trimethoxysilane compound (y) may be carried out in any order as long as it does not significantly impair the advantages of the present invention. Generally, these compounds are reacted by one-step mixing.

The method for this reaction is described in detail below.
A polyisocyanate compound is reacted with a polyol compound comprising a triol to form a urethane prepolymer having a triol compound bonded at its end. For this purpose, it is preferred to feed the polyol compound prior to the triol for the reaction of the polyol compound with the isocyanate groups of the isocyanate compound. The reaction is conducted generally at 40°C or higher, and preferably at 60°C or higher, and generally at 80°C or lower, and preferably at 70°C or lower. A higher reaction temperature may cause a highly exothermic reaction. On the other hand, a lower reaction temperature may lead to a slow-rate reaction. In addition, the reaction time is generally 60 minutes or longer, and preferably 120 minutes or longer, and generally 6 hours or shorter, and preferably 4 hours or shorter. A longer reaction time may cause coloring due to thermal degradation. On the other hand, a shorter reaction time may lead to insufficient reaction.

The resultant urethane prepolymer is then reacted with a polyisocyanate compound and an isocyanate group-containing trialkoxysilane compound (x) such as isocyanate propyltriethoxysilane to form a prepolymer having trialkoxysilane side chains. The reaction is conducted generally at 40°C or higher, and preferably at 60°C or higher, and generally at 80°C or lower, preferably at 70°C or lower. A higher reaction temperature may cause a highly exothermic reaction. On the other hand, a lower reaction temperature may lead to a slow-rate reaction. In addition, the reaction time is generally 60 minutes or longer, and preferably 120 minutes or longer, and generally 6 hours or shorter, and preferably 4 hours or shorter. A longer reaction time may cause coloring due to thermal degradation. On the other hand, a shorter reaction time may lead to insufficient reaction.

The resultant prepolymer is reacted with the hydroxyl group-containing (meth)acryloyl compound to form the urethane (meth)acrylate (A) having trialkoxysilane side chains. The reaction is conducted generally at 40°C or higher, and preferably at 60°C or higher, and generally at 75°C or lower, and preferably at 70°C or lower. A higher reaction temperature may cause gelation. On the other hand, a lower reaction temperature may lead to insufficient reaction. In addition, the reaction time is generally 2 hours or longer, and preferably 4 hours or longer, and generally 24 hours or shorter, and preferably 12 hours or shorter. A longer reaction time may cause coloring due to thermal degradation. On the other hand, a shorter reaction time may lead to insufficient reaction.

The resultant urethane (meth)acrylate (A) is solved in an alcohol solvent to be reacted with the silicate oligomer and the epoxy group-containing trimethoxysilane compound (y) in the same manner described above for the method for preparing the silica having epoxy groups on its surface. Consequently, the alkoxy groups derived from the isocyanate group-containing trialkoxysilane compound (x), the alkoxy groups of the silicate oligomer, and the methoxy groups of the epoxy group-containing trimethoxysilane compound (y) are combined by demethanolation reaction into a urethane (meth) acrylate compound (A) having epoxy groups.

### (c. Properties of compound (C) having one or more epoxy groups in a molecule)

The molecular weight of the compound (C) having one or more epoxy groups in a molecule is preferably 1000 or less, more preferably 700 or less, much more preferably 500 or less, and generally 100 or more, but the lower limit is not limited thereto. A higher molecular weight may lead to an excess increase in viscosity of the radiation-curable composition for an optical recording medium.

The compound (C) having one or more epoxy groups in a molecule is preferably liquid at room temperature for superior workability. Accordingly, the melting point is generally 25°C or lower, and preferably 15°C or lower, more preferably 5°C or lower, and generally -50°C or higher, but the lower limit is not limited thereto.

The amount of the epoxy groups in the compound (C) having one or more epoxy groups in a molecule in terms of the epoxy equivalent weight showing the molecular weight per epoxy group in the compound is generally 90 or more, but the lower limit is not particularly limited thereto, and generally 500 or less, and preferably 300 or less, more preferably 200 or less. A higher epoxy equivalent weight (that is, a lower epoxy group content in the compound) may require a large amount of epoxy compound for satisfactory results, resulting in low mechanical strength due to a large volume fraction of radiation-noncurable component.

The content of the compound (C) having one or more epoxy groups in a molecule is generally 0.1% by weight or more, and preferably 0.3% by weight or more, more preferably 0.5% by weight or more, and generally 10% by weight or less, and preferably 5% by weight or less, more preferably 3% by weight or less based on the radiation-curable composition for an optical recording medium of the present invention. A higher content of the compound (C) may increase the volume fraction of the radiation noncurable component, resulting in low mechanical strength.

The content of the compound (C) having one or more epoxy groups in a molecule based on the radiation-curable composition for an optical recording medium of the present invention means the total amount of all compounds having epoxy groups (the relevant compounds having epoxy groups, and compounds having one or more epoxy groups in a molecule in the case where all or parts of the urethane (meth) acrylate compound (A), the second acrylate compound (B), or the polymerization initiator(D) each contains epoxy groups) among the compounds contained in the radiation-curable composition for an optical recording medium of the present invention.

In addition, the epoxy group content in the radiation-curable composition for an optical recording medium of the present invention is generally 1×10⁻⁶ mol/g or more, preferably 1×10⁻⁵ mol/g or more, and more preferably 2×10⁻⁵ mol/g or more, and generally 1×10⁻³ mol/g or less, and preferably 5×10⁻⁴ mol/g or less, more preferably 2×10⁻⁴ mol/g or less. A lower epoxy group content may lead to poor corrosion proof. On the other hand, a higher epoxy group content may impair the preservation stability. It is, however, preferred to feed more epoxy groups in the case of a remarkably high halogen content, particularly a high chlorine content in the radiation-curable composition for an optical recording medium. For example, it is preferred to feed at least a stoichiometric amount of epoxy groups (1.4×10⁻⁵ mol/g in this case) for 500 ppm of chlorine atoms contained in the radiation-curable composition for an optical recording medium.

### (d. Mechanism of corrosion proof by epoxy group)

It is not revealed why the advantages of the present invention can be provided by the radiation-curable composition for an optical recording medium having one or more epoxy groups. The inventors presume that enhanced adherence to the substrate of the radiation-curable composition for an optical recording medium by epoxy groups may prevent concentration of water and aqueous ions at the interface between the radiation-curable composition for an optical recording medium and the substrate, and epoxy groups may capture corrosive substances such as inorganic chlorides, whereby corrosion proof can be provided.

### <1-5. Acid components>

The acid content in the radiation-curable composition for an optical recording medium of the present invention is 1.0×10⁻⁴ eq/g or less, for a type other than a film surface-incidence type. Similarly, the acid content in the radiation-curable composition for an optical recording medium of film surface-incidence type is preferably 1.0×10⁻⁴ eq/g or less. In addition, the acid content is more preferably 0.5×10⁻⁴ eq/g or less, much more preferably 0.2×10⁻⁴ eq/g or less, most preferably 0.03×10⁻⁴ eq/g or less. A higher acid content may readily cause corrosion of metals. It may also lead to poor dimensional stability of an adherend to moisture due to high water absorption of the radiation-curable composition for an optical recording medium of the present invention, or may accelerate the chemical reaction of the recording layer in an optical recording medium. In particular, chemical reaction may be further accelerated in an optical recording medium of film surface-incidence type.

The type of the acid components is not particularly limited. Examples of the acid components include inorganic acids such as hydrochloric acid and sulfuric acid, and organic acids such as formic acid, acetic acid, acrylic acid, benzoic acid, succinic acid, and oxalic acid.
The content of the acid components may be determined by any known method, for example, titration with KOH.

### <1-6. Auxiliary substances>

The radiation-curable composition for an optical recording medium of the present invention may optionally comprise auxiliary substances such as additives as long as the resultant cured product is within the scope of the present invention. Examples of the auxiliary substances include stabilizers such as antioxidant, heat stabilizer, and light absorber; fillers such as glass fiber, glass beads, silica, alumina, zinc oxide, titanium oxide, mica, talc, kaolin, metal fiber, and metal powder; carbonaceous materials such as carbon fiber, carbon black, graphite, carbon nanotube, and fullerenes, e.g., C₆₀ (fillers and fullerenes are collectively referred to as inorganic filling materials); modifiers such as antistatic agent, plasticizer, mould release agent, antifoaming agent, leveling agent, anti-sedimentation additive, surfactant, and tixotropy enhancer; colorants such as pigment, dye, and hue modifier; hardener, catalyst, and hardening accelerators for the formation of a monomer and/or its oligomer, or an inorganic component. The content of these auxiliary substances is not limited as long as the resultant cured product is within the scope of the present invention, but generally 20% by weight or less, and preferably 10% by weight or less, more preferably 5% by weight or less based on the radiation-curable composition for an optical recording medium.
These auxiliary substances may be used alone or in any combination at any ratio of two or more.

Of these substances, silica as a filler will be explained in detail below. In the radiation-curable composition for an optical recording medium of the present invention, the silica means general silicon oxides, and the proportion of silicon to oxygen and the morphology of the silica (crystalline or amorphous) are not essential. Examples of the silica include silica particles dispersed in a solvent or silica particles in a powder form, which are industrially-produced; silica particles derived or produced from raw materials such as alkoxysilane. Among them preferred are silica particles dispersed in a solvent or silica particles derived or produced from a raw material such as alkoxysilane for blendability and dispersibility in preparation of the radiation-curable composition for an optical recording medium.

In the present invention, the number-average particle diameter of the silica particle is not limited, but desirably 0.5 nm or more, preferably 1 nm or more, and desirably 50 nm or less, preferably 40 nm or less, more preferably 30 nm or less, still more preferably 15 nm or less, most preferably 12 nm or less. A preferred number-average particle diameter is a super fine particle level, but an extremely small diameter may lead to an enormous increase in agglomeration of ultra fine particles, resulting in extremely poor transparency and mechanical strength of a cured product, whereby the properties due to quantum effect would be poor.

The number-average particle diameter of the silica particles can be determined by morphological observation using, for example, transmission electron microscope (TEM).

The silica particles described in (a. Compound (C) having one or more epoxy groups in a molecule) in <1-4. Epoxy group-containing compound> also preferably have the same number-average particle diameter as these silica particles.

### <1-7. Method for preparing radiation-curable composition for optical recording medium and properties of composition>

### (a. Method for preparing radiation-curable composition for optical recording medium)

The radiation-curable composition for an optical recording medium of the present invention is prepared by uniformly mixing a urethane (meth)acrylate compound (A), and optionally a second acrylate compound (B), a polymerization initiator (D), and auxiliary substances by stirring with radiation blocked. In this case, all or part of the urethane (meth)acrylate compound (A) may have epoxy groups. Alternatively, the composition may contain a compound having one or more epoxy groups in a molecule, in addition to the urethane (meth)acrylate compound (A). All or part of the second acrylate compound (B), the polymerization initiator (D), and the auxiliary substances may also contain epoxy groups.

The stirring conditions here are not particularly limited, but the following conditions are preferred.
The stirring rate is generally 100 rpm more, and preferably 300 rpm more, and generally 1000 rpm less. The stirring at such rate is efficient, and can reduce bubble entrainment.
The stirring time is generally 10 seconds or longer, and preferably 3 hours or longer, and generally 24 hours or shorter for enhancing the stirring efficiency.
The stirring temperature is generally ordinary temperature, but may be increased to 90°C or lower, preferably 70°C or lower to reduce the viscosity for enhancing the efficiency.
The mixing of these compounds may be conducted in any order, but it is preferred to add liquid and/or solid components with high viscosity to liquid components with low viscosity for stirring, and it is preferred to add the polymerization initiator (D) in the last phase.

### (b. Properties of radiation-curable composition for optical recording medium)

The viscosity at 25°C of the radiation-curable composition for an optical recording medium of the present invention is preferably 1000 centipoises or more, more preferably 1300 centipoises or more, and preferably 5000 centipoises or less, more preferably 4000 centipoises or less, much more preferably 3000 centipoises or less with 2000 centipoises or less being most preferred. A lower viscosity may preclude formation of a cured product having a thickness of 50µm or more. On the other hand, a higher viscosity may preclude formation of a cured product having a smooth surface. Note that one centipoise is 1 mPa·s.
The viscosity can be measured by, for example, a Type E viscometer, a Type B viscometer, or a vibration viscometer.
Examples of the techniques for regulating the viscosity include regulation of the molecular weight and the amounts of the urethane (meth) acrylate compound (A) and the second acrylate compound (B), and addition of a diluent, a solvent, a thickener, and a rheology controller. Among them particularly preferred is the regulation of the amounts of the urethane (meth)acrylate compound (A) and the second acrylate compound (B).

The radiation-curable composition for an optical recording medium of the present invention, however, preferably contains substantially no solvent to prevent trouble in reading and writing of information due to residual air bubbles. The phrase "contains substantially no solvent" means a state of a very low content of organic solvent having volatility or a low boiling point, wherein, generally, the content of the solvent in the radiation-curable composition for an optical recording medium is desirably 5% by weight or less, preferably 3% by weight or less, more preferably 1% by weight or less, most preferably 0.1% by weight or less. In brief, in this state, odor of the organic solvent is not detected.

### <1-8. Method for preparing cured product composed of radiation-curable composition for an optical recording medium and properties of product>

### (a. Method for preparing cured product composed of radiation-curable composition for an optical recording medium)

A cured product composed of the radiation-curable composition for an optical recording medium is formed by "radiation curing" in which polymerization reaction is initiated by radiation (active energy rays or electron beams). The polymerization reaction may be any known reaction, for example, radical polymerization, anionic polymerization, cationic polymerization, or coordination polymerization. Among them particularly preferred is radical polymerization. The reason is not clear, but it is presumed that the radical polymerization can proceed uniformly and in a short time in the polymerization system to yield a homogeneous product.

The above-mentioned radiations are electromagnetic waves (e.g., gamma rays, X-rays, ultraviolet light, visible light, infrared light, microwave), or corpuscular rays (e.g., electron beams, alpha rays, neutron beams, or various atomic beams) which act on the polymerization initiator (D) to generate chemical species for the initiation of the required polymerization reaction. Examples of the preferred radiations for use in the present invention include ultraviolet light, visible light, and electron beams which can provide energy as general light sources. Ultraviolet light and electron beams are particularly preferred.

In the case of radiation of ultraviolet light, a photo-radical generator generating radicals by the action of ultraviolet light (see the examples for the polymerization initiator (D)) is preferably used as the polymerization initiator (D). In this case, a sensitizer may be optionally used. The wavelength of the above-mentioned ultraviolet light is generally 200 nm or more, and preferably 240 nm or more, and generally 400 nm or less, and preferably 350 nm or less.

Examples of the preferred device for use in the radiation of ultraviolet light include known devices such as high-pressure mercury lamps, metal halide lamps, ultraviolet light lamps generating ultraviolet light by the action of microwave. The output of the device is generally 10 W/cm or more, and preferably 30 W/cm or more, and generally 200 W/cm or less, and preferably 180 W/cm or less. Moreover, the device is desirably placed at the distance of generally 5 cm or more, and preferably 30 cm or more, and generally 80 cm or less, preferably 60 cm or less from the irradiated object, resulting in, for example, less photo and thermal deterioration and less thermal deformation of the irradiated object.

The radiation-curable composition for an optical recording medium of the present invention can be preferably cured by electron beams to form a cured product having excellent mechanical properties, in particular, excellent tensile elongation. Use of electron beams, provided with an expensive light source and irradiator, has advantages that the polymerization initiator (D) is not necessary and the polymerization is not inhibited by oxygen, resulting in a cured product having excellent surface hardness. The type of the electron beam irradiator for the irradiation with electron beams is not particularly limited, but examples of the electron beam irradiator include curtain, area beam, broad beam, and pulse beam irradiators. The preferred accelerating voltage of electron beams is generally 10 kV or more, and preferably 100 kV or more, and generally 1000 kV or less, and preferably 200 kV or less.

The irradiation intensity of these radiations is generally 0.1 J/cm² or more, and preferably 0. 2 J/cm² or more, and generally 20 J/cm² or less, and preferably 10 J/cm² or less, and more preferably 5 J/cm² or less, much more preferably 3 J/cm² or less, and most preferably 2 J/cm² or less. The irradiation intensity may be selected according to the type of the radiation-curable composition for an optical recording medium within such a range.

The irradiation time with radiation is generally 1 second or longer, and preferably 10 seconds or longer, and generally 3 hours or shorter, preferably 1 hour or shorter for accelerating reaction and enhancing productivity. A significantly small irradiation energy of radiation or a significantly short irradiation time may lead to insufficient polymerization, resulting in a cured product exhibiting poor heat resistance and mechanical properties. On the other hand, a significantly large irradiation energy of radiation may cause, for example, unsatisfactory hue such as yellowing caused by light.

The irradiation may be conducted in one stage or in two or more stages. A diffused radiation source which emits a radiation in all directions is generally used. Generally, the radiation-curable composition for an optical recording medium formed into a given shape in a mold is irradiated by a stationary radiation source while the composition is placed on a fixed position or on a transfer conveyer. In addition, the radiation-curable composition for an optical recording medium may be applied to any appropriate substrate (e.g., resins, metals, semiconductors, glass, or paper) to form a liquid film, which is then cured by irradiation.

### (b. Properties of cured product composed of radiation-curable composition for an optical recording medium)

Preferred cured products composed of the radiation-curable composition for an optical recording medium of the present invention are generally insoluble in, for example, a solvent, have excellent properties suitable for optical elements even in the case of a cured product having a large thickness, and have an excellent adherence and surface hardness. Specifically, preferred cured products have a low optical strain (low birefringence), high light transmittance, high mechanical strength, high dimensional stability, high adherence, high surface hardness, and at least a certain level of heat/moisture deformation resistance. In addition, a cured product having a lower curing shrinkage is more preferred.

The thickness of the cured product composed of the radiation-curable composition for an optical recording medium of the present invention is generally 10 µm or more, and desirably 20 µm or more, preferably 30 µm or more, more preferably 70 µm or more, most preferably 85 µm or more, and generally 300 µm or less, and preferably 130 µm or less, more preferably 115 µm or less. A cured product having such a thickness can have high compatibility between the effect of dust on reading and writing of information and the transmittance.

The light transmittance of the cured product composed of the radiation-curable composition for an optical recording medium of the present invention for an optical path length of 0.1 mm at a wavelength of 550 nm is generally 80% or more, and preferably 85% or more, more preferably 89% or more. The upper limit of the transmittance is not limited and preferably it is as much as close to 100%. A lower light transmittance, which represents low transparency of the cured product, results in an increase in reading error of recorded information on an optical recording medium made of the cured product.
In addition, the light transmittance of a cured product composed of the radiation-curable composition for an optical recording medium of the present invention for an optical path length of 0.1 mm at a wavelength of 400 nm is preferably 80% or more, more preferably 85% or more, most preferably 89% or more.
The light transmittance can be measured at room temperature by any known method, for example, an ultraviolet-visible light absorptiometer (Model: HP8453, manufactured by Hewlett-Packard Company).

In order to ensure such a high light transmittance of the cured product composed of the radiation-curable composition for an optical recording medium of the present invention, preferably individual components of the composition have high light transmittances. These components preferably rarely contain impurities such as colored substances and decomposed substances. In addition, the components are preferably prepared using a smaller amount of catalyst. These are effective in preventing the light transmittance in the visible region from decreasing.
Moreover, it is preferred to select components having aliphatic or alicyclic skeletons containing no aromatic rings. These are effective in preventing the light transmittance in the ultraviolet region from decreasing.

The surface hardness of a cured product composed of the radiation-curable composition for an optical recording medium of the present invention determined by the pencil hardness test according to JIS K 5400 is generally 6B or harder, and preferably 4B or harder, more preferably B or harder, most preferably HB or harder.

### [2. Optical recording medium]

The optical recording medium of the present invention is not particularly limited as long as it has a protective film formed on the surface of a substrate having films such as a dielectric film, a recording film, and a reflective film (hereafter collectively referred as a recording/reproducing functional layer) formed thereon. The preferred optical recording medium is an optical recording medium of film surface-incidence type where a recording/reproducing light enters from the protective-layer side. In addition, the preferred optical recording medium is a next-generation high-density optical recording medium using a blue laser. In the present invention, the next-generation high-density optical recording medium means an optical recording medium in which a protective film is formed on a substrate having films such as a dielectric film, a recording film, and a reflective film (hereafter collectively referred to as a recording/reproducing functional layer) formed thereon, and which uses a laser light having a wavelength of 380 to 800 nm, preferably 450 to 350 nm.

The recording/reproducing functional layer may have any layer structure suitable for the type of the optical recording medium, such as a read-only medium (ROM medium), a recordable medium which allows recording only once (write-once medium), and a rewritable medium which allows repeated recording and deletion (rewritable medium).

For example, in a read only medium, the recording/reproducing functional layer is generally composed of a single layer containing a metal, e.g. Al, Ag, or Au. In a recordable medium, the recording/reproducing functional layer is generally composed of a reflective layer containing a metal, e.g. Al, Ag, or Au, and a recording layer containing organic dye formed on the substrate in this sequence. In a rewritable medium, the recording/reproducing functional layer is generally composed of a reflective layer containing a metal, e.g. Al, Ag, or Au, a dielectric layer, a recording layer, and a dielectric layer formed on the substrate in this sequence.

Fig. 1 is a cross-sectional view illustrating an exemplary recording/reproducing functional layer 5 in a rewritable optical recording medium 10. The recording/reproducing functional layer 5 is composed of a reflective layer 51 made of a metal material and directly disposed on a substrate 1, a recording layer 53 made of a phase-change material, and two dielectric layers 52 and 54 sandwiching the recording layer 53.

A protective layer 3 is made of a cured product formed by spin coating the radiation-curable composition for an optical recording medium of the present invention, is in contact with the recording/reproducing functional layer 5, and is a flat disk. The protective layer 3 is made of a material that can transmit a laser light for the recording/reproduction. The transmittance of the protective layer 3 at the wavelength of the light used for the recording/reproduction is generally 80% or more, and preferably 85% or more, more preferably 89% or more. The transmittance within such a range may minimize a loss caused by absorption of light in recording/reproducing. Although the transmittance of 100% is particularly preferred, the transmittance is generally 99% or less due to the performance of the materials used.

It is desirable that the protective layer 3 be sufficiently transparent to the laser light having a wavelength close to one used in recording/reproducing of the optical disc, and can protect the recording layer 53 formed on the substrate 1 from water and dust. In addition, the preferred surface hardness of the protective layer 3 determined by the pencil hardness test according to JIS K 5400 is B or harder. A lower surface hardness may readily cause scratches on a surface of a cured product. A higher surface hardness is not a problem itself, but it may lead to a fragile cured product, and readily cause cracks and delamination.

Moreover, the high adherence between the protective layer 3 and the recording/reproducing functional layer 5 is preferred. High adherence over time is also preferred. The preferred proportion of the remaining adhesion area of the protective layer 3 to the recording/reproducing functional layer 5 after the medium is allowed to stand in an environment of 80°C and 85%RH (relative humidity) for 100 hours, more preferably 200 hours is 50% or more, more preferably 80% or more, and most preferably 100% based on the initial adhesion area.

The thickness of the protective layer 3 is generally 10 µm or more, and desirably 20 µm or more, preferably 30 µm or more, more preferably 70 µm or more, most preferably 85 µm or more, and generally 300 µm or less, and preferably 130 µm or less, more preferably 115 µm or less. A thickness having such a rage may moderate the effect of dust and scratches on the substrate of the protective layer 3. It may also protect the recording/reproducing functional layer 5 from external moisture. In addition, it may readily lead to the formation of a film having a uniform thickness by a general method, for example, spin coating. The protective layer 3 preferably has such a uniform thickness over the area that covers the recording/reproducing functional layer 5.

It should be noted that a hard coat layer (not shown in Fig. 1) may be further formed on the protective layer 3. This hard coat layer is preferably made of a cured product composed of a radiation-curable composition containing, for example, a radiation-curable monomer and/or its oligomer having a functional group selected from a (meth)acryloyl group, a vinyl group, and a mercapto group, a fluorinated compound, a silicone compound, and the silica particles described above such that the light transmittance at a wavelength of 550 nm is 80% or more, the contact angle to water is 90° or more, and the surface hardness is B, more preferably HB or harder.

In addition, the preferred hard coat layer has an antifouling property such as a high contact angle to water.
Examples of the preferred materials used in the antifouling hard coat layer (a hard coat material) include radiation-curable compositions containing silicone or fluorinated compounds as antifouling agents, polyfunctional (meth)acrylate monomers, epoxy compounds, and inorganic components such as inorganic nanoparticles.

Examples of the antifouling agent include polymers having silicone skeletons such as organopolysiloxane skeletons, radiation-curable compounds having silicone skeletons and acryl groups, silicone compounds such as silicone surfactants, fluorine atom-containing polymers, radiation-curable compounds having fluorine atoms and acryl groups, fluorinated compounds such as fluorochemical surfactants.

A medium having a high recording density such as an optical recording medium using a blue laser, however, is sensitive to dirt such as fingerprints, grit, and dust due to its small laser spot diameter. Preferably, it should be noted that dirt including organic substances, in particular, fingerprints on the surface of a medium a laser light enters may cause serious problems such as errors in recording/reproducing of a laser and cannot be readily removed.

From the above point of view, a preferred antifouling hard coat material comprises an antifouling agent having polysiloxane or fluorinated groups, and has a radiation curing property. In particular, a hard coat material containing an antifouling agent provided with a radiation curing property is preferably used. Such examples include the following materials:
(1) radiation-curable hard coat materials containing polysiloxane compounds and/or fluorinated compounds having terminal radiation-curable groups, and containing no inorganic component;
(2) radiation-curable hard coat materials comprising polymers having radiation-curable groups, polysiloxane units and/or organic fluorine group units; and
(3) radiation-curable hard coat materials comprising polysiloxane compounds and/or fluorinated compounds having a side chain formed of radiation-curable groups.
   These radiation-curable hard coat materials (1) to (3) are described in detail below.

The radiation-curable hard coat material (1) preferably comprises 0.01 parts by weight or more and 10 parts by weight or less of polysiloxane compound and/or fluorinated compound having a terminal radiation-curable group, 88 parts by weight or more and 99.5 parts by weight or less of (meth)acrylate composition containing 30% by weight or more of (meth)acrylate having 3 or more of (meth)acryloyl groups in a molecule, and 0.1 parts by weight or more and 10 parts by weight or less of photo polymerization initiator (100 parts by weight in total) as essential components. Moreover, the radiation-curable hard coat material (1) may optionally comprise an organic solvent which can dissolve these essential components for the control of, for example, viscosity and coating characteristics.

Examples of the polysiloxane compound having a terminal radiation-curable group include polysiloxanes having acryloyl groups or methacryloyl groups at their one or two ends. Among them preferred is polydimethylsiloxane having (meth)acryloyl groups at its both ends and having a number average molecular weight of 500 or more and 10000 or less. These polysiloxane compounds having terminal radiation-curable groups may be used alone or in any combination at any ratio of two or more.

Examples of the fluorinated compound having a terminal radiation-curable group include perfluoroalkyl compounds, perfluoroalkylene compounds, and perfluoroalkylene polyether compounds, having terminal acryloyl or methacryloyl groups. These fluorinated compounds having terminal radiation-curable groups may be used alone or in any combination at any ratio of two or more.

Examples of the (meth)acrylate having three or more (meth)acryloyl groups in a molecule include pentaerythritol triacrylate, pentaerythritol tetraacrylate, dipentaerythritol pentaacrylate, dipentaerythritol hexaacrylate, ditrimethylolpropane tetraacrylate, polyester acrylates, polyfunctional urethaneacrylates, polyepoxyacrylates, and isocyanurate ring-containing triethoxy acrylates (e.g., Aronix M315 and M313 manufactured by Toagosei Co., Ltd.). The (meth)acrylates having three or more (meth)acryloyl groups in a molecule may be used alone or in any combination at any ratio of two or more.

In addition, the (meth)acrylate composition containing 30% by weight or more of (meth)acrylate having 3 or more of (meth)acryloyl groups in a molecule may contain (meth)acrylate having 1 or 2 of (meth)acryloyl groups in a molecule.

Examples of the (meth)acrylate compound having one (meth) acryloyl group in a molecule include alkyl (meth) acrylates such as butyl (meth)acrylate and stearyl acrylate; alicyclic (meth)acryates such as cyclohexyl acrylate and isobornyl methacrylate; hetero cyclic structure-containing acrylates such as tetrahydrofurfuryl acrylate. In addition, aromatic ring-containing (meth)acrylate, hydroxy group-containing (meth)acrylate, and polyalkylene glycol chain-containing (meth)acrylate may be preferably used. The (meth)acrylate compounds having one (meth)acryloyl group in a molecule may be used alone or in any combination at any ratio of two or more.

Examples of the (meth)acrylate compound having two (meth)acryloyl groups in a molecule include di(meth)acrylates of aliphatic or alicyclic diols, such as hexanediol diacrylate, polyalkylene glycol di(meth)acrylates such as polyethylene glycol diacrylate, polyester diacrylate, polyurethane diacrylate, and bifunctional epoxyacrylates. These (meth)acrylate compounds having two (meth)acryloyl groups in a molecule may be used alone or in any combination at any ratio of two or more.

Examples of the photo polymerization initiator include alkylphenone compounds (α-hydroxyacetophenone, α-aminoacetophenone, and benzilketal compounds), acyl phosphine oxide compounds, oxime ester compounds, oxyphenyl acetic acid esters, benzoin ethers, phenyl formate esters, and ketone/amine compounds. Specific examples of such compounds include benzoin methyl ether, benzoin ethyl ether, benzoin propyl ether, benzoin butyl ether, diethoxyacetophenone, benzyl dimethyl ketal, 2-hydroxy-2-methylpropiophenone, 1-hydroxycyclohexyl phenyl ketone, benzophenone, 2,4,6-trimethylbenzoin diphenyl phosphine oxide, 2-methyl-[4-(methylthio)phenyl]-2-morpholino-1-propanone, 2-benzyl-2-dimethylamino-1-(4-morpholinophenyl)-butan-1-one, methyl benzoyl formate, Michler's ketone, isoamyl N,N-dimethylamino benzoate, 2-chlorothioxanthone, and 2,4-diethylthioxanthone. These photo polymerization initiators may be used alone or in any combination at any ratio of two or more.

Examples of the preferred solvent include alcohols (e.g., ethanol, isopropyl alcohol, and isobutyl alcohol), ketones (e.g., acetone, methyl ethyl ketone, and methyl isobutyl ketone), alcohols having alkoxy groups (e.g., methoxy ethanol, ethylene glycol monoethyl ether, and propylene glycol monomethyl ether), ethers (e.g., ethylene glycol dimethyl ether and diethylene glycol dimethyl ether), ether esters (e.g., propylene glycol monomethyl ether acetate and 2-ethoxyethyl acetate), aromatic hydrocarbons (e.g., toluene and xylene), and esters (e.g., ethyl acetate and propyl acetate). These solvents may be used alone or in any combination at any ratio of two or more. It is preferred to optionally select a solvent having excellent compatibility with other components and/or uniform dispersibility.

The radiation-curable hard coat material (2) preferably comprise 0.1 to 20 parts by weight of polymer having radiation-curable groups and polysiloxane units and/or organic fluorine groups, 79.8 to 99.5 parts by weight of (meth)acrylate composition containing 30% by weight or more of (meth)acrylate having 3 or more of (meth) acryloyl groups in a molecule, and 0.1 to 10 parts parts (sic) by weight of photo polymerization initiator as the essential components(100 parts by weight in total). The radiation-curable hard coat material (2) may further comprise organic-inorganic hybrid (meth)acrylate in an amount of less than 50% by weight based on the total amount of the (meth)acrylate composition so that inorganic (oxide) fine particles such as silica can be contained. Moreover, the radiation-curable hard coat material (2) may optionally contain an organic solvent which can dissolve these essential components for the control of, for example, viscosity and coating characteristics.

Examples of the polymer having radiation-curable groups and polysiloxane units and/or organic fluorine groups include polymers formed by copolymerization of dimercapto silicone and/or perfluoroalkyl (meth)acrylates with epoxy group-containing (meth)acrylates as essential components and addition of carboxylic acids containing (meth)acryloyl groups to the epoxy groups of the resultant copolymer. These polymers having radiation-curable groups and polysiloxane units and/or organic fluorine groups units may be used alone or in any combination at any ratio of two or more.

The radiation-curable hard coat material (3) preferably comprises 0.01 to 10 parts by weight of polysiloxane compound and/or fluorinated compound having side chain formed of radiation-curable groups, 88 to 99.5 parts by weight of (meth)acrylate composition containing 30% by weight or more of (meth)acrylate having 3 or more of (meth)acryloyl groups in a molecule, and 0.1 to 10 parts by weight or less of photo polymerization initiator as the essential components (100 parts by weight in total). The radiation-curable hard coat material (3) may comprise organic-inorganic hybrid (meth)acrylate in an amount of less than 50% by weight based on the total amount of (meth)acrylate composition so that inorganic (oxide) fine particles such as silica can be contained. Moreover, radiation-curable hard coat material (3) may optionally contain an organic solvent which can dissolve these essential components for the control of, for example, viscosity and coating characteristics.

Examples of the polysiloxane compound and/or fluorinated compound having side chain formed of radiation-curable groups include poly(dimethylsiloxane-methyl(meth)acryloyloxyalkylsiloxane), poly(dimethylsiloxane-methyl(meth)acryloylsiloxane), or poly(dimethylsiloxane-methyl(meth)acryloyloxyalkyloxy siloxane) having 2 or more of side chain formed of (meth) acryloyl groups in a molecule; polyglycidyl methacrylate oligomers modified with (meth)acrylic acid and end-capped with polyperfluoroalkylene polyether or perfluoroalkyl mercaptan, which have 2 or more of side chain formed of (meth) acryloyl groups in a molecule. These polysiloxane compounds and/or fluorinated compounds having side chain formed of radiation-curable groups may be used alone or in any combination at any ratio of two or more.

The radiation used for curing the hard coat material is not particularly limited, and usable radiation is the same as that used in, for example, the formation of the above-mentioned protective layer.

The optical recording medium may further include a back layer (not shown) on a surface of the opposite side to the recording/reproducing functional layer 5 of the substrate 1.
The modulus of elasticity of the back layer at 25°C is preferably within a predetermined range. Specifically, the upper limit is 2000 MPa, and preferably 1500 MPa. The lower limit is not limited, but is preferably higher than that of the protective layer. A higher modulus of elasticity of the back layer may cause significant deformation of an optical recording medium caused by a change in temperature. The modulus of elasticity may be determined by a tensile test with, for example, a Tensilon tester at a tensile rate of, for example, 1 mm/min.

The upper limit of the thickness of the back layer is generally 50 µm or less, and preferably 30 µm or less, more preferably 20 µm or less, most preferably 15 µm or less. A larger thickness of the back layer may cause optical recording media to come into contact with each other when the media are stacked for storage, resulting in not only poor appearance but also reading error of recorded information.

Any known material for back layers may be used without restriction. For example, the same material used for the protective layer may be used. It is particularly preferred to select materials by which the modulus of elasticity defined above can be achieved. Such a material particularly preferred is a radiation-curable composition. Examples of the resin contained in the radiation-curable composition used in the formation of the back layer include resin compositions containing compounds having unsaturated bonds such as alkyl (meth) acrylates, urethane (meth)acrylates, and polyester (meth)acrylates at their molecular ends or in their side chains, as the main components. Among the main components preferred is urethane (meth)acrylates which can form a back layer with curing shrinkage or solvent. Examples of the urethane (meth)acrylate include urethane (meth) acrylate (A) used in the formation of the protective layer. These materials for the back layer may be used alone or in any combination at any ratio of two or more.

In addition, examples of the components used in combination with the above-mentioned main component include monofunctional (meth)acrylates. Examples of the monofunctional acrylates (sic) include (meth)acrylamides such as N,N-dimethyl (meth)acrylamide; hydroxyalkyl (meth)acrylates such as hydroxyethyl (meth)acrylate, hydroxypropyl (meth)acrylate, and hydroxybutyl (meth)acrylate; alicyclic (meth)acrylates such as (meth)acryloyl morpholine, tetrahydrofurfuryl (meth)acrylate, isobornyl (meth)acrylate, cyclohexyl (meth)acrylate, and (meth)acrylates having tricyclodecane skeletons. Among them preferred are monofunctional acrylates having alicyclic structures such as isobornyl (meth)acrylate, cyclopentane (meth) acrylate, and dicyclopentadienyl (meth)acrylate which can provide a back layer with high modulus of elasticity. These monofunctional acrylates may be used alone or in any combination at any ratio of two or more.

The content of the urethane (meth)acrylate in the radiation-curable composition used for the formation of the back layer is, preferably 1% by weight or more, more preferably 10% by weight or more, most preferably 30% by weight or more, and preferably 70% by weight or less, more preferably 60% by weight or less based on the total content (100% by weight) of the urethane (meth)acrylate and monofunctional (meth)acrylate.

The radiation-curable composition used in the formation of the back layer may further comprise polyfunctional (meth)acrylate in an amount which does not cause a decrease in modulus of elasticity. The polyfunctional (meth)acrylates may be the same polyfunctional (meth) acrylates used in the formation of the protective layer. These polyfunctional (meth)acrylates may be used alone or in any combination at any ratio of two or more.

The radiation-curable composition used in the formation of the above-mentioned back layer may further comprise, for example, a polymerization initiator or any auxiliary substance to initiate polymerization reaction induced by radiation (e.g., active energy rays, ultraviolet light, or electron beams). Specific examples of such substances include the polymerization initiator (D) and auxiliary substances used in the radiation-curable composition in the formation of the protective layer. These polymerization initiators and auxiliary substances may be used alone or in any combination at any ratio of two or more.

The method for applying a radiation-curable composition used in the formation of the back layer is not particularly limited. The radiation-curable composition may be applied by a common method such as spin coating.
The radiation used for curing the radiation-curable composition in the formation of the back layer is also not particularly limited, and may be the same radiation used, for example, in the formation of the above-mentioned protective layer.

Moreover, a thin film such as an inorganic layer may be formed on a surface, a surface of the opposite side to the recording/reproducing functional layer 5, of the substrate 1 of the optical recording medium by, for example, a sputtering process, for preventing the deformation of the optical recording medium caused by a change in temperature, but no thin film is preferred for reducing the cost.

The resulting optical recording media may be used alone or in of the form of a laminate of 2 or more media. The medium may be provided with a hub and is optionally mounted into a cartridge.

### [3. Advantages of the radiation-curable composition for an optical recording medium of the present invention]

The cured product composed of the radiation-curable composition for an optical recording medium of the present invention can prevent the corrosion of the metal layers of an optical recording medium while maintaining mechanical properties and preservation stability. The reduced corrosion of the metal layers may contribute to a low error-rate even after the optical recording medium is allowed to stand for a long time at high-temperature and high-humidity environments, resulting in high reliability of the optical recording medium.

### [Examples]

### (Preparation of urethaneacrylate composition A)

Into a four-necked flask was placed 66.7g of isophorone diisocyanate, then the content was heated to 70 to 80°C in an oil bath while being stirred gently until the temperature became constant. After the temperature became constant, 4.5g of 1,4-butanediol was added, and 63.5g of polytetramethylene ether glycol ("PTMG650" manufactured by Mitsubishi Chemical Corporation) was added dropwise through a dropping funnel. The mixture was stirred for two hours while the temperature was maintained at 80°C. After the temperature was lowered to 70°C, the mixture of 43.6g of 2-hydroxyethylacrylate, 0.06g of methoquinone, and 0.04g of dibutyltin dioctoate was added dropwise through a dropping funnel. The temperature was increased to 80°C, and then the mixture was stirred at the same temperature for ten hours to form a urethaneacrylate oligomer having a polyether polyol skeleton. To the product were added 36.3g of isobornyl acrylate and 24.2g of dicyclopentadienyl dimethanol diacrylate ("DCPA" manufactured by Shin-nakamura Chemical Corporation) to lower the viscosity, whereby a urethaneacrylate composition A is produced.

### (Preparation of urethaneacrylate composition B)

Into a four-necked flask was placed 66.7g of isophorone diisocyanate, and the content was heated to 70 to 80°C in an oil bath while being stirred gently until the temperature became constant. After the temperature became constant, 4.5g of 1, 4-butanediol was added, and 70.0g of polyester polyol compound ("Kuraray polyol P-1090" manufactured by KURARAY CO., LTD.) and 15.0g of polyester polyol compound (" Kuraray polyol P-590" manufactured by KURARAY CO., LTD.) were added dropwise through a dropping funnel, and were stirred for 2 hours while the temperature was maintained at 80°C. The temperature was lowered to 70°C, and then the mixture of 43. 5g of 2-hydroxyethylacrylate, 0.06g of methoquinone, and 0.04g of dibutyltin dioctoate was added dropwise through a dropping funnel. After the temperature was increased to 80°C, the mixture was stirred for ten hours at the same temperature to form a urethaneacrylate oligomer having a polyester polyol skeleton. To the product were added 40.0g of isobornylacrylate and 26.6g of dicyclopentadienyl dimethanol diacrylate ("DCPA" manufactured by Shin-nakamura Chemical Corporation) to lower the viscosity, whereby a urethaneacrylate composition B was produced.

### (Example 1)

The resultant urethaneacrylate composition A (85g), tetrahydrofurfuryl acrylate (10g), neopentyl glycol diacrylate (5g), and a bisphenol A epoxy resin (0.5g, 828US: manufactured by Japan Epoxy Resins Co., Ltd.) were stirred for one hour at room temperature. Then, 5g of 1-hydroxycyclohexyl phenyl ketone was added as a polymerization initiator, and the mixture was stirred for further three hours at room temperature to produce a radiation-curable composition for an optical recording medium.
This radiation-curable composition for an optical recording medium was applied onto a polycarbonate disc having a diameter of 120 mm and a thickness of 1.1 mm provided with an Ag sputtered film (100 nm in thickness) with a spin coater, and cured by ultraviolet light with an intensity of 1 J/cm² emerging from a high-pressure mercury lamp to form a cured coating film having a thickness of 100 µm. The degree of corrosion of the resultant laminate was evaluated after it was allowed to stand for 100 hours in a thermo-hygrostat set at 80°C and 85%RH. The results are shown in Table 1.

### (Example 2)

The same procedure of Example 1 was repeated except that 2.0g of bisphenol A epoxy resin (828US: manufactured by Japan Epoxy Resins Co., Ltd.) was used instead of 0.5g of bisphenol A epoxy resin (828US: manufactured by Japan Epoxy Resins Co., Ltd.). The results are shown in Table 1.

### (Example 3)

The same procedure of Example 1 was repeated except that 0. 5g of bisphenol F epoxy resin (807: manufactured by Japan Epoxy Resins Co., Ltd.) was used instead of 0.5g of bisphenol A epoxy resin (828US: manufactured by Japan Epoxy Resins Co., Ltd.). The results are shown in Table 1.

### (Example 4)

The same procedure of Example 1 was repeated except that a urethaneacrylate composition B was used instead of a urethaneacrylate composition A. The results are shown in Table 1.

### (Example 5)

The same procedure of Example 1 was repeated except that 20g of bisphenol A epoxy resin was used instead of 0.5g of bisphenol A epoxy resin. The results are shown in Table 1.

### (Comparative Example 1)

The same procedure of Example 1 was repeated except that a bisphenol A epoxy resin (828US: manufactured by Japan Epoxy Resins Co., Ltd.) was not used. The results are shown in Table 1.

### (Evaluation of degree of corrosion)

The compositions used in Examples 1 to 5 and Comparative Example 1 were applied to a circular substrate (sputtered with silver) having a diameter of 120 mm. After the lifetime test (80°C/80%RH for 100 hours), the microscopic field of 1 mm square in which the corrosion advances most was observed with an optical microscope. The degree of corrosion was determined as follows:
(1) Foreign substances having a size of 100 µm or more were found: degree of corrosion = 3
(2) No foreign substances having a size of 100 µm or more were found, but one to five foreign substances having a size of 10 µm to 30 µm were found: degree of corrosion = 2
(3) No foreign substances having a size of 10 µm or more were found, but one to five foreign substances having a size of 5 µm to 10 µm were found: degree of corrosion = 1
(4) No foreign substances having a size of 5 µm or more were found: degree of corrosion = 0
(5) Between degree of corrosion 3 and 2: degree of corrosion = 2.5
(6) Between degree of corrosion 2 and 1: degree of corrosion = 1.5

### (Amount of chlorine)

The amount of chlorine was determined by combustion ion chromatography.

### (Surface-hardening property)

A film of each composition having a thickness of 100 µm was formed on a glass plate having a size of 10 cm square and a thickness of 3 mm with a spin coater. The surface-hardening property was evaluated by tackiness remaining on a surface after the plate was irradiated with 300m J/cm² of ultraviolet light from 15 cm above the plate using a high-pressure mercury lamp.
The tackiness was determined on whether or not the imprints remained on the coated surface when three parts of the surface were touched gently by a rubber-gloved forefinger.
(1) Three imprints remained: singularly bad
(2) One or two imprints remained: not good
(3) No imprint remained: good

### (Viscosity)

The viscosity of a radiation-curable composition for an optical recording medium was determined with a Type E viscometer in a thermo-hygrostat set at 25°C and 65%RH.

### (Light transmittance)

A radiation-curable composition for an optical recording medium was applied to a glass plate having a size of 10 cm square and a thickness of 3 mm with a spin coater and was cured by ultraviolet light with an intensity of 1 J/cm² emerging from a high-pressure mercury lamp to form a coating film having a thickness of 100 µm. The light transmittance of a laminate having the resultant coating film was determined for an optical path length of 0.1 mm at wavelength of 550 nm using an ultraviolet-visible light absorptiometer (Model: HP8453, manufactured by Hewlett-Packard Company).

### (Acid content)

The acid content of a radiation-curable composition for an optical recording medium was determined by titration with KOH.

[Table 1]

**Table 1**

| | Epoxy group-containing compound [mol/g] | Urethane acrylate composition | Degree of corrosion | Amount of chlorine in composition [ppm] | Hardening property | Viscosity [centipoise] | Light transmittance [%] | Acid content [eq/g] |
|---|---|---|---|---|---|---|---|---|
| Example 1 | 0.5 parts (2.6×10⁻⁵) of bisphenol A | A | 0 | 15 | good | 1200 | 89 | 0.1×10⁻⁴ |
| Example 2 | 2 parts (1.1×10⁻⁴) of bisphenol A | A | 0 | 29 | good | 1300 | 89 | 0.1×10⁻⁴ |
| Example 3 | 0.5 parts (2.9×10⁻⁵) of bisphenol F | A | 0.5 | 35 | good | 1200 | 89 | 0.1×10⁻⁴ |
| Example 4 | 0.5 parts (2.6×10⁻⁵) of bisphenol A | B | 0.5 | 15 | good | 1600 | 89 | 0.1×10⁻⁴ |
| Example 5 | 20 parts (1.1×10⁻³) of bisphenol A | A | 1.5 | 200 | good | 2200 | 86 | 0.1×10⁻⁴ |
| Comparative Example 1 | None | A | 2 | 9 | good | 1200 | 89 | 0.1×10⁻⁴ |

Comparison of Examples 1 and 2 with Comparative Example 1 shows that the cured products composed of the radiation-curable compositions for an optical recording medium of the present invention have a smaller degree of corrosion, indicating a satisfactory property.
Comparison of Examples 1 and 3 with Comparative Example 1 shows that the cured products composed of the radiation-curable compositions for an optical recording medium of the present invention have a smaller degree of corrosion, indicating a satisfactory property, regardless of the types of the epoxy group-containing compounds. Moreover, the cured products containing bisphenol A have a smaller degree of corrosion, indicating a satisfactory property compared to the cured product containing bisphenol F.
Comparison of Examples 1 and 4 with Comparative Example 1 shows that the cured products composed of the radiation-curable compositions for an optical recording medium of the present invention have a smaller degree of corrosion, indicating a satisfactory property, regardless of the types of the urethane (meth)acrylate compounds.
In addition, comparison of Examples 1 and 2 with Example 5 shows that the cured products having an epoxy group content of 1×10⁻⁶ mol/g to 1×10⁻³mol/g have a smaller degree of corrosion, and indicating a satisfactory property.

### Industrial Applicability

The method of the present invention can be applied to any industrial fields. In particular, it can be preferably applied to a radiation-curable composition for a protective layer in an optical recording medium, and an optical recording medium using the composition.

While the invention has been described in detail with reference to the preferred embodiments, it is apparent to those skilled in the art that various modifications may be made therein without departing from the scope of the invention.
The present application is based on JP-A-2006-341707 filed on December 19, 2006 and JP-A-2007-222293 filed on August 29, 2007, which are herein incorporated in their entireties by reference.

## Claims

1. A radiation-curable composition for an optical recording medium comprising a urethane (meth)acrylate compound (A);
the composition further comprising a compound (C) having one or more epoxy groups,
wherein the acid content is 1.0×10⁻⁴ eq/g or less.

2. A radiation-curable composition for an optical recording medium of film surface-incidence type comprising a urethane (meth)acrylate compound (A);
the composition further comprising a compound (C) having one or more epoxy groups.

3. The radiation-curable composition for an optical recording medium according to claim 1 or 2, further comprising an acrylate compound (B) other than the urethane (meth) acrylate compound (A).

4. The radiation-curable composition for an optical recording medium according to claim 3, wherein the acrylate compound (B) other than the urethane (meth)acrylate compound (A) comprises a polyfunctional (meth)acrylate compound.

5. The radiation-curable composition for an optical recording medium according to any one of claims 1 to 4, wherein the compound (C) having one or more epoxy groups in a molecule is at least one resin selected from a bisphenol A epoxy resin and a hydrogenated bisphenol A epoxy resin.

6. The radiation-curable composition for an optical recording medium according to any one of claims 1 to 5, wherein the epoxy group content is 1×10⁻⁶ mol/g to 1×10⁻³ mol/g.

7. The radiation-curable composition for an optical recording medium according to any one of claims 1 to 6, wherein the urethane (meth)acrylate compound (A) is produced by the reaction of a polyisocyanate compound, a polyether polyol compound, and a hydroxyl group-containing (meth)acrylate compound.

8. The radiation-curable composition for an optical recording medium according to claim 7, wherein the polyether polyol compound is a polyalkylene glycol having a molecular weight of 800 or less.

9. An optical recording medium comprising a cured product comprising the radiation-curable composition for an optical recording medium according to any one of claims 1 to 8.
